# EUROPEAN PATENT SPECIFICATION

(11) **EP 0 463 181 B1**
(45) Date of publication and mention of the grant of the patent: **13.05.1998**
(21) Application number: 91902756.5
(22) Date of filing: 16.01.1991
(51) Int. Cl.: A47J 31/02, B65D 81/00

(54) **BAG FOR EXTRACTING**
BEUTEL ZUR EXTRAKTION
SACHET D'EXTRACTION

(30) Priority: 16.01.1990 JP 4550/90; 25.01.1990 JP 13678/90; 25.01.1990 JP 13679/90
(43) Date of publication of application: 02.01.1992
(73) Proprietor: YAMANAKA SANGYO KABUSHIKI KAISHA, Ukyo-ku, Kyoto-shi, Kyoto 616 (JP)
(72) Inventor: SUZUKI, Kaichi, Kyoto-shi, Kyoto 616 (JP); FUKUCHI, Masaaki, Kyoto-shi, Kyoto 604 (JP)
(74) Representative: Newby, John Ross
(86) International application number: JP9100030
(87) International publication number: WO9110390

(56) References cited:
- EP-A- 0 290 801
- DE-A- 2 738 969
- JP-U- 0 633 335
- JP-Y- 5 039 822

## Description

The present invention relates to a filter bag for extraction and, more specifically, to a filter bag capable of facilitating an extraction in which a liquid extractant, for example, hot water, is brought into contact with a material to be extracted and contained in the filter bag when set over a container, for example, a cup.

A conventional filter bag for the extraction of tea or the like is provided by charging a bag member made from a water-permeable filtering material with a material to be extracted through an opened end, and sealing the opened end of the bag member. The filter bag containing the material to be extracted is immersed in an extractant liquid, for example, hot water, for extraction, or the filter bag is suspended in the extractant liquid by a hanging string and is agitated in the extractant liquid by using the string, to thus promote the extraction. Where the material to be extracted is a coffee powder, the upper end of the filter bag is opened and hot water is poured into the filter bag through the open end thereof to extract and filter the coffee. Japanese Unexamined Utility Model (Kokai) No. 57-162166 discloses an extraction bag with a hanging string, wherein an opened bag is suspended from the hanging string and hot water is poured into the bag through the opened end thereof. When this type of extraction bag is used, an extraction operator must hold the string of the bag by one hand, and thus the hot water-pouring operation becomes difficult.

To solve this problem, filter bags provided with a support plate at the upper ends thereof have been proposed in Japanese Unexamined Patent Publication (Kokai) No. 64-46422 and Japanese Unexamined Utility Model Publication (Kokai) Nos. 60-7617 and 60-7623, and a filter bag provided with a holding member attached to a side edge thereof has been proposed in Japanese Unexamined Utility Model Publication (Kokai) No. 55-123480.

These prior art filter bags, however, require a troublesome operation for setting them over a container for extraction, or difficulties arise in securely holding the upper ends thereof open during extraction.

Another known filter bag is disclosed in Japanese Unexamined Utility Model Publication (Kokai) No. 50-39822 which has a pair of foldable hook members on both the front and back sides of the filter bag. To retain the filter bag in an open position, all four hook members need to be attached to a container rim. In addition opening of the upper end of the filter bag is not facilitated by folding the hook members outwardly into operative positions from their flat inoperative positions.

An object of the present invention is to provide a filter bag capable of being readily set over a container for extraction and of applying an extraction operation to a material to be extracted and contained in the bag.

Another object of the present invention is to provide a filter bag having an upper end which is securely maintained in the opened state while an extractant liquid is poured into the bag through the open upper end.

To achieve the foregoing objects, the present invention provides a filter bag for extraction as claimed in the ensuing claim 1.

The filter bag of the present invention as mentioned above optionally contains a material to be extracted therein, and the openable upper end of the bag member is closed.

Embodiments of the invention will now be described, by way of example only, with reference to the accompanying drawings, in which
Figs. 1A and 1B respectively, are a front view of another embodiment of the filter bag according to the present invention, and a perspective side view of the same when the upper end is opened for the use thereof,
Fig. 2 is a partial front view of another embodiment of a filter bag according to the present invention provided with a holding member, and
Figs. 3 and 4 show a front view of a further embodiment of a filter bag according to the present invention, and a perspective side view of the same when opened for the use thereof, respectively.

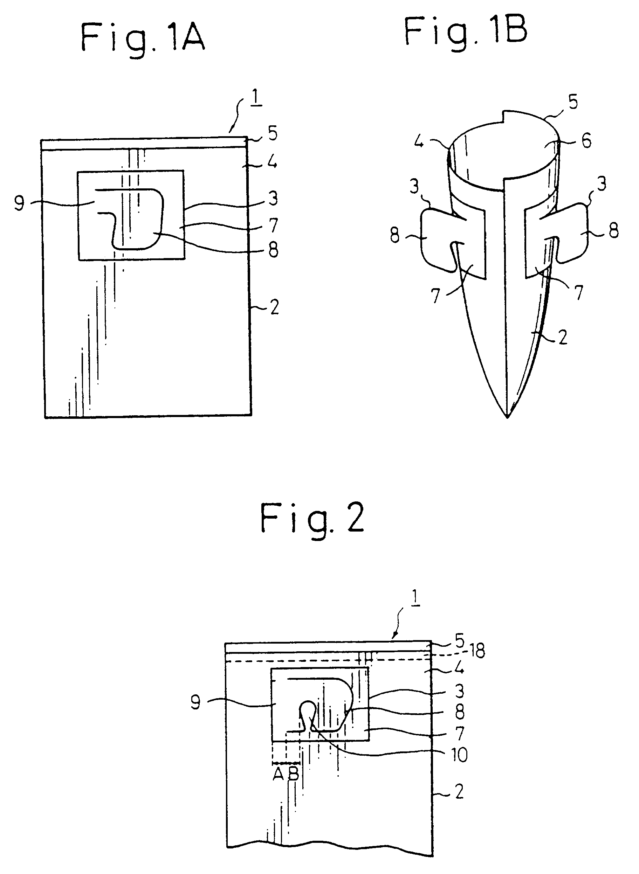

An embodiment of the filter bag of the present invention is shown in Figs. 1A (front view) and Fig. 1B (perspective side view when opened). In Figs. 1A and 1B, the filter bag 1 comprises a bag member 2 and a holding member 3. The bag body 2 substantially consists of a front side 4 and a back side 5 facing each other and having a openable end at an upper edge thereof. All the other edges are closely sealed or connected to provide spaced apart opposite side edges and a bottom edge. As shown in Figs. 1A and 1B, the upper end of the back side 5 is extended beyond the upper edge of the front side 4, to facilitate the separating of the upper ends of the front side face 4 and the back side face 5 from each other, to thereby easily open the upper end of the bag member 2. Note, the upper edges of the front side 4 and the back side 5 may be flush with each other.

The bag member 2 is composed of a water-permeable sheet selected from, for example, filter paper sheets, nonwoven fabrics, composite sheets formed by combining substrates, for example, mesh sheets, with a filtering nonwoven fabric. The front side 4 and the back side 5 are continuous to each other or closely joined together along the lower edge and the side edges of the bag member 2, and only the upper end of the bag member 2 is openable.

The holding member 3 consists of a base strip 7 and a single hook member 8 supported by the base strip 7. The base strip 7 and the hook member 8 may be formed integrally by cutting a single sheet. A separate base strip 7 is attached and fixed to the upper half of a respective different one of the front side 4 and the back side 5 of the bag member 2. The hook members 8 are supported by the respective base strips 7. Each hook member 8 may be formed by a portion of the sheet from which the base strip 7 is formed. Namely, as shown in Fig. 1A, the sheet for forming the base strip 7 is slitted in the shape of the hook member 8, and then, as shown in Fig. 1B, the hook member 8 is raised from the base strip 7 in such a manner that the hook member 8 is continuous to the base strip 7 through a connecting portion 9.

The base strip 7 and the hook member 8 also may be provided separately, and an end of the hook member 8 connected to the base strip 7 with an adhesive.

In the filter bag of the present invention for extraction, the base strip attached and fixed to the bag member must be water-resistant at least at the fixing face portion thereof, to prevent a separation of the base strip from the bag member due to a permeation of an extractant liquid into the base strip through the bag member.

In the formation of the water resistant fixing face of the base strip, at least the fixing face of the base strip is attached to the bag member through a hydrophobic synthetic resin layer. In an example, the water resistant stratum is formed from a water resistant material, for example, a hydrophobic resin (a polyethylene resin or a polypropylene resin), and attached to the fixing face portion of the bag member. In another example, a water resistant adhesive (for example, a hydrophobic adhesive comprising, as a principal component, an epoxy resin or a modified polyolefine resin) is interposed between the bag member and the fixing face of the base strip.

In the filter bag of the present invention for extraction, although there are no particular restrictions on the size and shape of the base strip to be attached and fixed to the upper half of the bag member, the base strip is formed of a material and has a thickness and size suitable for maintaining the bag member in the open state when the upper end of the bag member is opened. Accordingly, the base strip preferably covers the bag member over 30% or more, more preferably 40% to 80%, of the width of the base body. Also, the base strip comprises a sheet material capable of causing the base strip, when the base strip is folded or bent, to maintain the given form, and is selected from a paper sheet, syntheic paper sheet, plastics sheet, nonwoven fabric, woven fabric or knitted fabric having a thickness of 60 µm or more. To facilitate the opening of the upper end of the bag member, a fold may be imparted to at least one predetermined portion in the upper half of the bag body and the base strip, to enable the upper end of the bag body to be easily opened.

The hook member of the holding member can be formed of a paper sheet, synthetic paper sheet or plastic sheet having a thickness of 60 µm or more.

The bag member of the filter bag of the present invention for extraction may be provided with a volume-indicating mark on one or both side faces of the bag member, to facilitate a determination of the quantity of a material in the filter bag to be extracted, or that of an extractant liquid, such as hot water, poured into the filter bag.

When using the filter bag of the present invention as shown in Figs. 1A and 1B, first the pair of hook members 8 of the holding members 3 attached to the front side 4 and the back side 5 of the bag member 2, respectively are raised toward the outside of the bag member, and due to this raising operation, the openable upper end 6 of the bag member 2 is opened. The pair of hook members 8 are caught on the brim of a container, (for example, a cup), a predetermined quantity of a material to be extracted, for example coffee powder, is put in the bag member, and then hot water is poured into the bag member for an extraction of the content thereof.

In the filter bag of present invention for extraction, there is no restriction on the shape of the hook member of the hold member, as long as the hook member can securely hold the opened filter bag on the container. Namely, the hook member 8 raised from the base strip 7 is connected to the base strip 7 by a relatively narrow connecting portion 9 as shown in Figs. 1A and 2A. Alternatively, as shown in Figs. 2, 3 and 4, the base strip 7 and the hook members 8 are interconnected by connecting portions 9 having a width equal to that of the hook members 8, and hooking recesses 10 are formed which extend inwardly from a side of the hook members 8. In this structure, the connecting portions 9 interconnecting the base strips 7 with the hook members 8 have a relatively high mechanical strength, and the hook members are able to maintain a stable form thereof when the filter bag is set over a container, and thus the filter bag can be securely held on the container.

Where the hook member 8 has the form and is in the position as shown in Fig. 2, preferably the width A of end portion of the base strip 7 is approximately equal to or greater than the width B of the connecting portion 9. This type of holding member is able to prevent an undesirable separation of the end portion of the base strip from the bag member, and enables the hook member to maintain the form thereof and the filter bag to be stably held when the filter bag is set over the container.

Preferably, the filter bag of the present invention is provided with a form-maintaining member fixed to at least one of the front and back side faces of the bag member, to securely maintain the bag member in the open state when the upper end thereof is opened.

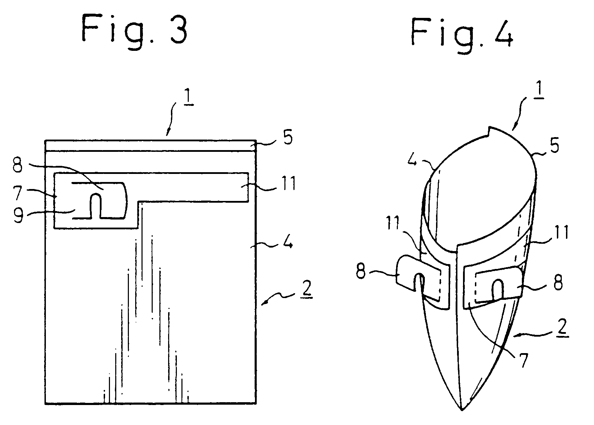

Fig. 3 is an explanatory front view of an embodiment of the filter bag of the present invention provided with a form-maintaining member as mentioned above.

Referring to Figs. 3 and 4, a form-maintaining member 11 is attached to an upper half of each of the front and back sides 4 and 5 of the bag member 2. Although there are no particular restrictions on the shape and size of the form-retaining member 11, preferably each form-maintaining member 11 has a thickness, a size and a shape, and is made of a material suitable for maintaining the bag member in the opened state when the upper end thereof is open. Accordingly, preferably each form-maintaining member 11 covers over 30% or more, more preferably 40% to 80%, of the width of the bag member, and is made from a sheet material capable of maintaining the sheet material, when folded or bent, in the given form, for example, a paper sheet, plastic sheet, nonwoven fabric, woven fabric or knitted fabric, having a thickness of 60 µm or more. A fold may be formed across the form-maintaining member at least one predetermined position in the upper half portion of the bag member, to enable the upper end of the bag member to be easily opened and maintained in the opened state thereof.

The form-maintaining member may be arranged on and fixed to the back face, front face or both the front and back faces of the bag member. It is important that at least the fixing face portion of the form-maintaining member be water-resistant, to prevent an undesirable separation of the form-maintaining member from the bag member by a permeation of an extractant liquid into the form-maintaining member through the bag member.

To provide the above-mentioned water-resistant fixing face, at least the fixing face portion of the form-maintaining member is attached to the bag member by a hydrophobic synthetic resin. For example, the form-maintaining member is made from a water-resistant material, for example, a hydrophobic resin, such as a polyethylene or a polypropylene resin, and attached to the bag member by a heat fuse-bonding method. Alternatively, a layer of a water-resistant adhesive, (for example, hydrophobic adhesive comprising an epoxy resin or a modified polyolefine resin as a principal component) is arranged between the bag member and the fixing face of the form-maintaining member.

In the embodiment of the filter bag 1 shown in Figs. 3 and 4, the form-maintaining members 11 are attached on and fixed to the upper halves of the front and back sides of the bag member 2. In this case, one end portion, i.e., the left end portion of the form-maintaining member as shown in Fig. 2, forms the base strips 7 of the holding member 3, and hook members are formed in the base strips 7.

There are no particular restrictions on the shape and size of the hook members employed in the present invention. The hook members may be formed in the shape and the size as shown in Figs. 1A and 1B, or for example, a recess 10 may be formed between the base strip 7 and the hook member 8 as shown in Figs 2, 3 and 4.

When the filter bags of the present invention in the embodiments as shown is subjected to an extraction operation, the hook members 8 are raised from the base strip 7, set over the brim of a container (not shown) such as a cup, and then the openable upper end of the bag member 2 is opened. At this step, the upper end of the bag member 2 is maintained securely in the opened form by the base strip 7 of the holding member 3 and the form-maintaining member 11. Then, a predetermined quantity of a material to be extracted, for example, a coffee powder, is put in the bag member, and then hot water is poured from the above into the bag member to extract coffee from the coffee powder.

In this extraction operation, the material to be extracted and contained in the bag member is stirred by the poured hot water in the bag member, to effect an even extraction thereof. The level of the extract in the container rises gradually with the progress of extraction, and when the bag member is immersed in the extract, the extract flows in the reverse direction into the bag member, to thereby release any blocking of the front and back faces of the bag member and enable the extraction to continue uniformly. The extraction effect and the blocking prevention effect can be further promoted by holding the bag member by the holding member, and shaking the bag member in the container.

Optionally, the filter bag of the present invention is pre-filled with a material to be extracted and the upper end of the bag member is sealed. The sealed end of the bag member may be openable. When this type of filter bag is subjected to an extraction operation, before, after, or while the hook members are raised from the base strips, the sealed upper end of the bag member is opened, and then the same extraction operation as mentioned above is applied to the opened filter bag.

In the filter bag of the present invention containing a material to be extracted, optionally, seam-like perforations 18 are formed in the upper edge portion of the bag member as shown in Fig. 2, to enable the upper edge portion to be easily torn off to thereby open the upper end of the bag member.

To seal the upper end of the bag member charged with the material to be extracted, for example, the bag member is formed from a double-layered water-permeable filtering composite sheet consisting of an inner layer composed of smaller denier fibers and an outer layer composed of large denier fibers having a denier of two or three times the denier of the small denier fibers, and the inside surfaces of the bag member is lightly heat-bonded. By this sealing operation, the filter bag of the present invention can prevent a spilling of the material to be extracted and contained therein during the transportation, storage or handling thereof.

In the filter bag of the present invention, the bag member has a rectangular shape. When the upper end of the bag member is opened, the lower edge of the bag member is curved inward and the right and left lower corners protrude downward in an inverted W letter shape. Consequently, the extract permeated through the bag member flows down from the right and left protruding lower corners. This flow improves the filtering efficiency and satisfactorily prevents dripping. The middle portion of the lower edge of the bag member may be creased in the shape of the inverted letter W, for an easy curving of the lower edge of the bag member.

The extraction efficiency of the filter bag of the present invention can be easily promoted by agitating the material to be extracted and contained in the bag member, through the opened upper end thereof.

When the filter bag of the present employed for extraction by opening an upper end of a bag member or an outer pocket member and pouring an extractant liquid such as hot water therein to extract a material to be extracted and contained, in the bag member, the bag member can be set over a brim of a container such as a cup, and the open upper end can be stably maintained in the open state, and accordingly, the extraction operation can be carried out easily, quickly and effectively. Therefore, the filter bag of the present invention for extraction is particularly useful for the extraction of coffee, black tea and green tea.

## Claims

1. A filter bag for extraction comprising: a bag member (2) formed of a water-permeable filtering sheet, and having front and back sides (4,5) facing each other, opposite side edges and an upper end that can be opened; and a pair of holding members (3) each fixed to an upper half portion of a different one of the front and back sides (4,5) of the bag member (2), each of the holding members (3) comprising a base strip (7) attached and fixed to the said associated upper half portion of the said sides (4,5), and a hook member (8) foldably connected to the associated base strip (7) by a connecting portion (9) positioned closer to one than the other of said side edges, the hook member (8) being foldable from an inoperative position flat against the base strip (7) to an operative position raised from the base strip, at least a portion of the base strip (7) which is fixed to the bag member (2) being water-resistant; characterised in that each hook member (8) in its inoperative position extends towards the said other side edges and, on folding into its operative position, is moved towards the said one side edge, to provide means for supporting the filter bag on the rim of a container at the same side of the container rim, and the base strip (7) fixed to each of the upper half portions of the front and back sides (4,5) of the bag member (2) is formed from a member selected from paper sheets, synthetic paper sheets, plastics sheets, nonwoven fabrics, woven fabrics and knitted fabrics each having a thickness of 60 µm or more and thus is capable of maintaining the bag member in the open state when said upper end is opened.

2. A filter bag according to claim 1, characterised in that each connecting portion (9) has a width equal to that of the hook number (8) to which it is connected.

3. A filter bag according to claim 2, characterised in that each hook member (8) has an inwardly extending recess (10) formed therein.

4. A filter bag according to any of the preceding claims, characterised in that said water-permeable filtering sheet is selected from filter paper sheets, nonwoven fabrics, and composite filter fabrics each consisting of a substrate composed of a coarse fabric and a nonwoven fabric laminate-bonded to the substrate.

5. A filter bag according to any of the preceding claims, characterised in that the base strip is attached to the bag member (2) by a hydrophobic synthetic resin layer.

6. A filter bag according to any of the preceding claims, characterised in that the base strip of each holding member covers at least one side face of the bag member over 30% or more of the width of the said front and back side to which it is attached.

7. A filter bag according to any of the preceding claims, characterised in that the hook member (8) of each holding member is formed from a member selected from paper sheets, synthetic paper sheets, and plastics sheets each having a thickness of 60 µm or more.

8. A filter bag according to any one of the preceding claims, characterised in that a form-maintaining member (11) is provided to cover at least one of said sides of the bag member over 30% or more of the width of the said side.

9. A filter bag according to claim 8, characterised in that the form-maintaining member (11) is attached to the bag member (2) through a hydrophobic synthetic resin layer.

10. A filter bag according to claim 8 or 9, characterised in that the form-maintaining member (11) is formed from a member selected from paper sheets, synthetic paper sheets, plastics sheets, nonwoven fabrics, woven fabrics, and knitted fabrics each having a thickness of 60 µm or more.

11. A filter bag according to any of the preceding claims, characterised in that said bag member contains a material to be extracted, and the openable upper end of the bag member is closed.

## Patentansprüche

1. Ein Filterbeutel für Extraktion, aufweisend: ein Beutelelement (2), das aus einem wasserdurchlässigen Filterbahnmaterial gebildet ist und eine Vorderseite (4) sowie eine Rückseite (5), wobei Vorderseite (4) und Rückseite (5) aufeinander zuweisen, gegenüberliegende Seitenränder und ein oberes Ende aufweist, das geöffnet werden kann; sowie ein Paar von Halteelementen (3), von denen ein jedes an einem oberen halben Bereich einer verschiedenen von Vorderseite (4) und Rückseite (5) des Beutelelements (2) befestigt ist, wobei ein jedes der Halteelemente (3) einen Basisstreifen (7), der zu dem zugeordneten, oberen, halben Bereich der genannten Seiten (4, 5) zugehörig und an diesem zugeordneten, oberen, halben Bereich der genannten Seiten (4, 5) befestigt ist, sowie ein Hakenelement (8) aufweist, das mit dem zugeordneten Basisstreifen (7) mittels eines Verbindungsbereichs (9) faltbar verbunden ist, der näher zu dem einen als zu dem anderen der genannten Seitenränder positioniert ist, wobei das Hakenelement (8) aus einer unwirksamen Position flach am Basisstreifen (7) in eine wirksame Position erhoben von dem Basisstreifen faltbar ist und wobei zumindest ein Bereich des Basisstreifens (7), welcher an dem Beutelelement (2) befestigt ist, wasserbeständig ist, **dadurch gekennzeichnet**, daß jedes Hakenelement (8) in seiner unwirksamen Position sich in Richtung zu den genannten anderen Seitenrändern hin erstreckt und beim Falten in seine wirksame Position in Richtung zu dem genannten einen Seitenrand hin bewegt wird, um eine Einrichtung zu ergeben, um den Filterbeutel an dem Rand eines Behälters an derselben Seite des Behälterrands zu tragen, und daß der Basisstreifen (7), welcher an jedem oberen halben Bereich der Vorderseite (4) bzw. der Rückseite (5) des Filterbeutels (2) befestigt ist, aus einem Element gebildet ist, das aus Papierbahnen, synthetischen Papierbahnen, Kunststofffolien, Faservliesstoffen, Geweben und Gewirken ausgewählt ist, wobei jedes Element eine Dicke von 60 µm oder mehr aufweist und infolgedessen dazu befähigt ist, das Beutelelement in dem offenen Zustand zu halten, wenn das genannte obere Ende geöffnet ist.

2. Ein Filterbeutel nach Anspruch 1, **dadurch gekennzeichnet**, daß jeder Verbindungsbereich (9) eine Breite aufweist, welche gleich zu derjenigen des Hakenelements (8) ist, mit welchem er verbunden ist.

3. Ein Filterbeutel nach Anspruch 2, **dadurch gekennzeichnet**, daß jedes Hakenelement (8) eine sich nach einwärts erstreckende Ausnehmung (10) aufweist, welche in dem Hakenelement (8) gebildet ist.

4. Ein Filterbeutel nach einem der vorhergehenden Ansprüche, **dadurch gekennzeichnet**, daß das genannte wasserdurchlässige Filterbahnmaterial aus Filterpapierbahnen, Faservliesstoffen und zusammengesetzten Filtergeweben ausgewählt ist, von denen jedes aus einem Substrat aus einem groben Gewebe und einem Faservliesstoff besteht, der an das Substrat laminatgebunden ist.

5. Ein Filterbeutel nach einem der vorhergehenden Ansprüche, **dadurch gekennzeichnet**, daß der Basisstreifen an dem Beutelelement (2) mittels einer hydrophoben synthetischen Harzschicht angebracht ist.

6. Ein Filterbeutel nach einem der vorhergehenden Ansprüche, **dadurch gekennzeichnet**, daß der Basisstreifen eines jeden Halteelements mindestens eine Seitenfläche des Beutelelements auf 30% oder mehr der Breite der genannten Vorderseite und der genannten Rückseite bedeckt, an welcher er angebracht ist.

7. Ein Filterbeutel nach einem der vorhergehenden Ansprüche, **dadurch gekennzeichnet**, daß das Hakenelement (8) eines jeden Halteelements aus einem Element gebildet ist, das aus Papierbahnen, synthetischen Papierbahnen und Kunststoffolien ausgewählt ist, wobei jedes Element eine Dicke von 60 µm oder mehr aufweist.

8. Ein Filterbeutel nach einem der vorhergehenden Ansprüche, **dadurch gekennzeichnet**, daß ein formerhaltendes Element (11) vorgesehen ist, um zumindest eine der genannten Seiten des Filterelements auf 30% oder mehr der Breite der genannten Seite zu bedecken.

9. Ein Filterbeutel nach Anspruch 8, **dadurch gekennzeichnet**, daß das formerhaltende Element (11) an dem Beutelelement (2) mittels einer hydrophoben synthetischen Harzschicht angebracht ist.

10. Ein Filterbeutel nach Anspruch 8 oder 9, **dadurch gekennzeichnet**, daß das formerhaltende Element (11) aus einem Element gebildet ist, das aus Papierbahnen, synthetischen Papierbahnen, Kunststoffolien, Faservliesstoffen, Geweben und Gewirken ausgewählt ist, wobei jedes Element eine Dicke von 60 µm oder mehr aufweist.

11. Ein Filterbeutel gemäß einem der vorhergehenden Ansprüche, **dadurch gekennzeichnet**, daß das genannte Beutelelement ein zu extrahierendes Material enthält und das obere Beutelelementende, das geöffnet werden kann, verschlossen ist.

## Revendications

1. Sac filtrant d'extraction, comprenant : un élément de sac (2) formé d'une feuille filtrante perméable à l'eau et ayant des côtés antérieur et arrière (4, 5) qui sont en face l'un de l'autre, des bords latéraux opposés et une extrémité supérieure qui peut être ouverte ; et deux éléments de support (3), dont chacun est fixé à une partie de moitié supérieure de l'un, différent, des côtés antérieur et arrière (4, 5) de l'élément de sac (2), chacun des éléments de support (3) comprenant une bande de base (7) fixée et assujettie à ladite partie associée de moitié supérieure desdits côtés (4, 5), ainsi qu'un élément de crochet (8) relié repliable à la bande associée de base (7) par une partie de liaison (9) positionnée plus près de l'un que de l'autre desdits bords latéraux, l'élément de crochet (8) étant repliable d'une position inactive à plat contre la bande de base (7) à une position active l'éloignant de la bande de base, au moins une partie de la bande de base (7) qui est fixée à l'élément de sac (2) étant résistante à l'eau ; caractérisé en ce que chaque élément de crochet (8) occupant sa position inactive est orienté vers lesdits autres bords latéraux et, lorsqu'il est plié pour être mis dans sa position active, il est déplacé vers ledit un bord latéral de manière à constituer un moyen de support du sac filtrant sur le rebord d'un récipient, sur le même côté du rebord du récipient et la bande de base (7) qui est fixée à chacune des parties de moitié supérieure des côtés antérieur et arrière (4, 5) de l'élément de sac (2) est formée d'un élément choisi parmi des feuilles de papier, des feuilles de papier synthétique, des feuilles de matière plastique, des étoffes non tissées, des étoffes tissées et des étoffes tricotées, chacune ayant une épaisseur de 60 µm ou davantage et étant ainsi capable de maintenir l'élément de sac à l'état ouvert lorsque ladite extrémité supérieure est ouverte.

2. Sac filtrant selon la revendication 1, caractérisé en ce que chaque partie de liaison (9) a une largeur égale à celle de l'élément de crochet (8) auquel elle est reliée.

3. Sac filtrant selon la revendication 2, caractérisé en ce que chaque élément de crochet (8) comporte en elle un évidement orienté vers l'intérieur (10).

4. Sac filtrant selon l'une quelconque des revendications précédentes, caractérisé en ce que ladite feuille filtrante perméable à l'eau est sélectionnée parmi des feuilles de papier filtre, des étoffes non tissées et des étoffes composites de filtrage, chacune consistant en un substrat composé d'une étoffe grossière et d'une étoffe non tissée liée par stratification au substrat.

5. Sac filtrant selon l'une quelconque des revendications précédentes, caractérisé en ce que la bande de base est fixée à l'élément de sac (2) par une couche de résine synthétique hydrophobe.

6. Sac filtrant selon l'une quelconque des revendications précédentes, caractérisé en ce que la bande de base de chaque élément de Support recouvre au moins une surface latérale de l'élément de sac sur 30% ou davantage de la largeur dudit côté antérieur ou arrière auquel elle est fixée.

7. Sac filtrant selon l'une quelconque des revendications précédentes, caractérisé en ce que l'élément de crochet (8) de chaque élément de support est formé d'un élément choisi parmi des feuilles de papier, des feuilles de papier synthétique et des feuilles de matière plastique dont chacune a une épaisseur de 60 µm ou davantage.

8. Sac filtrant selon l'une quelconque des revendications précédentes, caractérisé en ce qu'un élément (11) de maintien de la forme est placé de manière à couvrir au moins l'un desdits côtés de l'élément de sac sur 30% ou davantage de la largeur dudit côté.

9. Sac filtrant selon la revendication 8, caractérisé en ce que l'élément de maintien de la forme (11) est fixé à l'élément de sac (2) par une couche de résine synthétique hydrophobe.

10. Sac filtrant selon l'une des revendications 8 ou 9, caractérisé en ce que l'élément de maintien de la forme (11) est formé d'un élément choisi parmi des feuilles de papier, des feuilles de papier synthétique, des feuilles de matière plastique, des étoffes non tissées, des étoffes tissées et des étoffes tricotées, dont chacune a une épaisseur de 60 µm ou davantage.

11. Sac filtrant selon l'une quelconque des revendications précédentes, caractérisé en ce que ledit élément de sac contient une matière devant être extraite et l'extrémité supérieure de l'élément de sac qui peut être ouverte est fermée.
